# EUROPÄISCHE PATENTSCHRIFT

(11) **EP 3 501 777 B1**
(45) Veröffentlichungstag und Bekanntmachung des Hinweises auf die Patenterteilung: **11.05.2022**
(21) Anmeldenummer: 18211417.3
(22) Anmeldetag: 10.12.2018
(51) Int. Cl.: B29C 33/30

(54) **HERSTELLUNGSFORM MIT EINEM UNTERGESTELL UND EINER FORMHALBSCHALE**
MANUFACTURING MOULD WITH AN UNDER-FRAME AND A HALF-SHELL
MOULE DE FABRICATION DOTÉ D'UN CHÂSSIS ET D'UNE DEMI-COQUE DE MOULE

(30) Priorität: 19.12.2017 DE 102017011737
(43) Veröffentlichungstag der Anmeldung: 26.06.2019
(73) Patentinhaber: TPI Technology Inc., Scottsdale AZ 85253 (US)
(72) Erfinder: MAROIS, Mathias, 10247 Berlin (DE); ALWART, Jens, 13088 Berlin (DE)
(74) Vertreter: HGF

(56) Entgegenhaltungen:
- WO-A1-01/89746
- WO-A1-2011/009462
- WO-A2-2012/093136

## Beschreibung

Die Erfindung betrifft eine Herstellungsform mit einem Untergestell und einer auf dem Untergestell angeordneten Formteilschale mit einer Innenschale und einer Außenschale, die durch eine Vielzahl von Einstelleinrichtungen mit dem Untergestell verbunden ist.

Herstellungsformen für Rotorblattteilschalen, insbesondere Rotorblatthalbschalen sind im Stand der Technik natürlich hinlänglich bekannt.

Die DE 20 2013 105 458 U1 beschreibt ein Aushärtewerkzeug und Komponenten davon zum Aushärten von Rotorblatthalbschalen. Dort ist ein Trägerrahmen für ein Aushärtewerkzeug zur Herstellung von Rotorblättern offenbart, wobei der Trägerrahmen eine Formhalbschale stützt, auf der die Rotorblatthalbschale ausgebildet wird, und der Trägerrahmen weist eine erste und eine zweite Befestigungskante auf, die flexibel miteinander verbunden sind, so dass unterschiedliche Ausdehnungen von Trägerrahmen und Formschale bei Temperaturänderung ausgeglichen werden können.

Aus der EP 2 457 707 A2 ist eine Vorrichtung zur Steuerung der Verformungen einer Herstellungsform bekannt. Dabei sind außen um die Herstellungsform Rippen gelegt, die Verformungen auffangen.

In der WO 01/89746 A1 ist ein Verfahren zur Herstellung einer Form offenbart, wobei eine innere Metallschicht auf eine Matrix aufgebracht wird, Befestigungselemente auf der inneren Schicht befestigt werden und eine äußere Metallschicht über die innere Schicht aufgebracht wird, so dass die Befestigungselemente zwischen den Schichten eingebettet sind.

Problematisch an den bekannten Herstellungsformen ist, dass die Formteilschalen, insbesondere Formhalbschalen zur Herstellung ganzer Rotorblatthalbschalen erhebliche Abmessungen aufweisen. Sie können in einer Längsausdehnung 60 m oder mehr aufweisen und entlang einer Breite 3 bis 5 m oder noch größer ausgebildet sein. Die Formteilschalen sind selbst Laminatbauteile, die über ihre Ausdehnung natürlich selbst leicht verwunden oder verbogen werden können und dann nicht mehr die aerodynamisch optimale Sollform aufweisen. Dazu können Einstellvorrichtungen vorgesehen sein, die die Formteilschale in jedem Bereich auf die Sollform so weit einstellen, dass die Formteilschale von der Sollform über ihre gesamte Ausdehnung nirgendwo mehr als 1 mm abweicht.

Die Formteilschalen können durchaus mehrere Tonnen wiegen. Es wirken daher erhebliche Kräfte über die Einstelleinrichtungen auf die Formteilschalen, und beim Verstellen der Einstellvorrichtungen kann es zu Laminatabrissen innerhalb der Formteilschale kommen.

Es ist daher Aufgabe der Erfindung, eine eingangs genannte Herstellungsform zur Verfügung zu stellen, die gegenüber herkömmlichen Herstellungsformen haltbarer ist, in der insbesondere weniger Laminatabrisse innerhalb der Herstellungsform beim Einstellen auftreten.

Die Aufgabe wird durch eine eingangs genannte Herstellungsform mit den Merkmalen des Anspruchs 1 gelöst.

Die erfindungsgemäße Herstellungsform umfasst wenigstens einen Abstandshalter, vorzugsweise eine Vielzahl von Abstandshaltern, die in einem vorgegebenen Muster oder willkürlich über die Ausdehnung der Formteilschale verteilt sind. Die Abstandshalter sind zwischen einer Innenschale und einer Außenschale der Formteilschale angeordnet, und wenigstens ein Befestigungsmittel ist positionsfest mit dem wenigstens einen Abstandshalter verbunden und durch die Außenschale hindurch zum Untergestell geführt. Das wenigstens eine Befestigungsmittel ist mit wenigstens einer Einstelleinrichtung verbunden. Vorzugsweise ist jedem der Abstandshalter genau ein Befestigungsmittel und genau eine Einstelleinrichtung zugeordnet.

Die erfindungsgemäßen Formteilschalen umfassen eine Innenschale und eine Außenschale, die vorzugsweise über ein Kernmaterial, beispielsweise über einen Schaum, ein Wabenprofil oder Balsaholz voneinander beabstandet sind. Es entsteht dadurch eine Sandwichbauweise, die verwindungs- und biegestabil ist. Dennoch kann es zu Verwindungen und Verbiegungen im Bereich von Millimetern und Zentimetern entlang der Ausdehnung der Formteilschale von vielen Metern, bis zu 60 m und auch mehr, kommen.

Die erfindungsgemäße wenigstens eine Abstandshalter ist positionsfest an einer Innenseite der Innenschale und einer Innenseite der Außenschale befestigt, vorzugsweise festgeklebt. Von dem wenigstens einen Abstandshalter geht durch die Außenschale hindurch das wenigstens eine Befestigungsmittel, beispielsweise in Form eines Bolzens, einer oder mehrerer Laschen o. Ä. ab. Das wenigstens eine Befestigungsmittel ist mit der wenigstens einen Einstelleinrichtung, die beispielsweise in Form einer Spannschraube ausgebildet sein kann, gelenkig oder fest verbunden, so dass Zug- und Druckbelastungen, die über die wenigstens eine Einstelleinrichtung auf das wenigstens eine Befestigungsmittel wirken, nicht nur auf die Außenschale der Formteilschale wirken, sondern über den wenigstens einen Abstandshalter auch und insbesondere auf die Innenschale der Formteilschale wirken, so dass es nicht mehr zu den gefürchteten Laminatabrissen innerhalb der Formteilschale kommt. Erfindungsgemäß ist innenseitig auf die Außenschale eine Metallplatte geklebt, und außenseitig ist auf der Metallplatte das wenigstens eine Befestigungsmittel positionsfest angeordnet, vorzugsweise mit ihm verschweißt, wenn das wenigstens eine Befestigungsmittel selbst aus Metall besteht.

Dadurch wird eine hinreichend stabile Verbindung zwischen dem wenigstens einen Befestigungsmittel und der Metallplatte hergestellt. Weil die Metallplatte mit der Außenschale verklebt ist, wird auch mit der Außenschale eine feste Wirkverbindung hergestellt. Der wenigstens eine Abstandshalter wiederum ist auf die Innenseite der Metallpatte geklebt, und die Ausdehnung der Klebverbindung ist groß genug gewählt, um die entstehenden Zug- und Druckkräfte über den wenigstens einen Abstandshalter auf die Innenschale weiterleiten zu können. Der wenigstens eine Abstandshalter ist mit der Innenseite der Innenschale wiederum verklebt, wobei auch hier die Klebfläche groß genug gewählt ist, damit die auftretenden Zug- und Druckkräfte, die von außen über den wenigstens einen Abstandshalter auf die Innenschale wirken, übertragen werden können, ohne zu Abrissen zu führen.

Günstigerweise ist zwischen der Innenschale und einem Kernmaterial eine Heizschicht angeordnet. Dabei kann es sich um elektrisch ausgebildete Heizschlangen handeln. Die Heizschlangen dienen dazu, während des Aushärtevorganges bei der Rotorblattherstellung extern Wärmeenergie hinzuzuführen, um eine Vernetzung des Harzes in den Gewebelagen der Rotorblatthalbschale zu optimieren und eine besonders günstige Aushärtung zu bewirken.

Vorzugsweise ist der wenigstens eine Abstandshalter selbst aus einem Laminat gebildet. Laminate sind günstigerweise wenig wärmeleitend, so dass die durch die Heizschicht erzeugte Wärme nicht oder nur geringfügig von der Innenschale nach außen abgeleitet wird und zu lokalen Abkühlungen der Innenschale führen würde, die den Aushärtevorgang beeinträchtigen würden, da er dann nicht mehr über die gesamte Ausdehnung der Rotorblattschale homogen verlaufen würde.

Der wenigstens eine Abstandshalter kann in einem Querschnitt I-förmig, omegaförmig oder O-förmig ausgebildet sein, es sind natürlich auch noch andere Querschnitte denkbar. Die Querschnittformen sollten aber derart gewählt werden, dass sie eine hinreichend große Klebfläche zur Verfügung stellen.

Günstigerweise ist der wenigstens eine Abstandshalter in einer Längsrichtung senkrecht zum Querschnitt translationsinvariant ausgebildet. Dadurch ist seine Herstellung besonders einfach und kostengünstig.

Er weist Längen und Breiten von vorzugsweise 100 bis 150 mm auf, es sind natürlich auch andere Größen des wenigstens einen Abstandshalters denkbar. Eine Höhe des wenigstens einen Abstandshalters liegt zwischen 40 und 50 mm, es sind jedoch auch hier andere Abmessungen denkbar, die sich nach der Größe der Formteilschale richten müssen.

Vorzugsweise sind die Abstandshalter in Längsrichtung der Formteilschale in einem ersten Abstandsbereich und quer zur Längsrichtung in einem zweiten Abstandsbereich angeordnet, wobei der erste Abstandsbereich vorzugsweise größer als der zweite Abstandsbereich ist. Bei Formteilschalen zur Herstellung von Rotorblättern von mehr als 60 m sind beispielsweise die Abstände in Längsrichtung 2 m, und entlang der Breite der Formteilschale liegen diese bei etwa 1 m. Es sind jedoch auch andere Abstände von 2,5 m, 1,5 m in Längsrichtung sowie 0,5 m bis 1,5 m entlang der Breite denkbar, wobei auch alle Zwischenmaße mitoffenbart sein sollen.

Der wenigstens eine Abstandshalter selbst ist ein Laminatbauteil, das aus einer Mehrzahl an übereinandergeschichteten Gewebelagen gebildet ist, die mit einem Harz infundiert werden. Bei den im Querschnitt I-förmigen Abstandshaltern können zwei U-förmige Gewebelagen mit ihren unteren U-Seiten aneinandergelegt werden und entlang der U-Schenkel mit einer weiteren Gewebelage seitlich stabilisiert werden. Das gesamte Laminatbauteil wird mit einem Harz infundiert und ausgehärtet.

Der wenigstens eine Abstandshalter ist günstigerweise geometrisch so ausgebildet, dass er für einen Luftstrom in zumindest einer Richtung durchlässig ist. Bei Formteilschalen mit einem Kernmaterial ist das Kernmaterial häufig luftdurchlässig, so dass eine Luftzirkulation ermöglicht wird. Diese Luftzirkulation wird durch den erfindungsgemäßen wenigstens einen Abstandshalter nicht beeinträchtigt, so dass nach wie vor ein gleichmäßiger Erwärmungsvorgang der Rotorblatthalbschale durchgeführt werden kann.

Unter einer Formteilschale wird hier insbesondere auch eine Formhalbschale verstanden. Es ist aber auch denkbar, dass eine Formteilschale auch nur einen Rotorblatthalbschalenabschnitt herstellt.

Die Erfindung wird anhand von mehreren Ausführungsbeispielen in acht Figuren beschrieben. Dabei zeigen:
- Fig. 1: eine Herstellungsform mit Untergestell und Formhalbschale,
- Fig. 2a: eine Schnittansicht eines erfindungsgemäßen Abstandshalters in einer Omega-Ausführung,
- Fig. 2b: eine Schnittansicht eines erfindungsgemäßen Abstandshalters in einer I-Ausführung,
- Fig. 2c: eine Schnittansicht eines erfindungsgemäßen Abstandshalters in einer 0- Ausführung,
- Fig. 3: eine seitliche Ansicht des erfindungsgemäßen Abstandshalters mit Spannschraube,
- Fig. 4a: eine Schnittansicht des I-förmigen Abstandshalters in einer tipseitigen Ausführungsform,
- Fig. 4b: Schnittansicht des I-förmigen Abstandshalter in einer Ausführungsform im aerodynamischen Bereich des Rotorblattes,
- Fig. 5: eine Schnittansicht einer Befestigung des I-förmigen Abstandshalters mittels Laminaten.

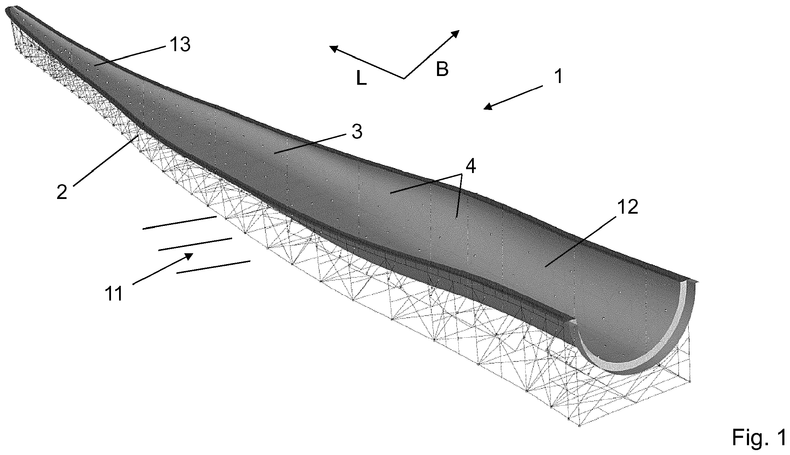

Fig. 1 zeigt in einer perspektivischen Ansicht eine Herstellungsform 1 für eine (nicht dargestellte) Rotorblatthalbschale. In der Fig. 1 ist ein Untergestell 2 gezeigt, das aus einer fachwerkartigen Gitterstruktur besteht und einer oben, dem Erdboden abgewandt, auf das Untergestell 2 aufgelegten Formhalbschale 3 , in der die Rotorblatthalbschale gefertigt wird.

Die Formhalbschale 3 ist mit dem Untergestell 2 über Einstelleinrichtungen 4 verbunden, die hier in Form von Spannschrauben 6 ausgebildet sind. Fig. 1 zeigt über die gesamte Ausdehnung der Herstellungsform 1 eine große Anzahl verwendeter Spannschrauben 6.

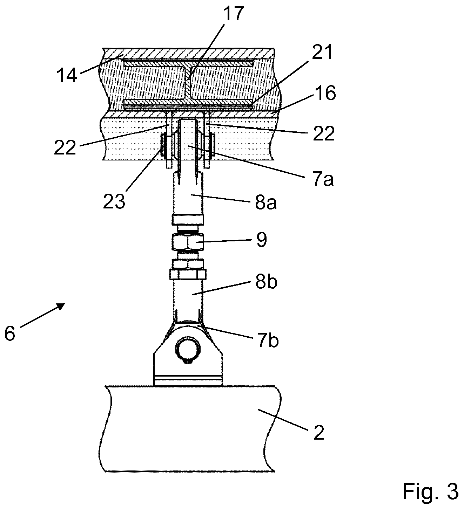

Fig. 3 zeigt eine der Spannschrauben 6 in einer seitlichen Ansicht. Die Spannschraube 6 weist zwei sich gegenüberliegend angeordnete Ösen 7a, 7b mit einander zugewandten Schraubgewinden 8a, 8b auf, in die jeweils eine Seite einer doppelseitigen Schraube 9 eingeschraubt ist. Die doppelseitige Schraube 9 wird mittels einer Mutter gedreht und so der Abstand der Ösen 7a, 7b voneinander eingestellt.

Die in Fig. 1 dargestellte Herstellungsform 1 betrifft ein Rotorblatt mit einer Länge von bis zu 73 m und darüber hinaus. Die Formhalbschale 3 ist mittels einer Vielzahl der Spannschrauben 6 in einer Höhe über einem Erdboden 11 einstellbar. Die Spannschrauben 6 sind in einer Längsrichtung L der Formhalbschale 3 in einem Abstand von etwa zwei Metern und quer zur Längsrichtung L entlang einer Breite B in einem Abstand von etwa einem Meter angeordnet. Die Abstände variieren jedoch in der Längsrichtung L, wie man an einer Rotorblattwurzel 12 erkennen kann und in der Breite B auch im Bereich einer Rotorblattspitze 13. In der Formhalbschale 3 wird die Rotorblattschale als Faserverbundbauteil in einem Stück gefertigt, und dann werden zwei Rotorblatthalbschalen zum Rotorblatt zusammengeklebt. Dazu kann eine der Formhalbschalen 3 über eine andere (hier nicht dargestellte) Formhalbschale geklappt werden; es sind jedoch auch andere Herstellungsverfahren denkbar.

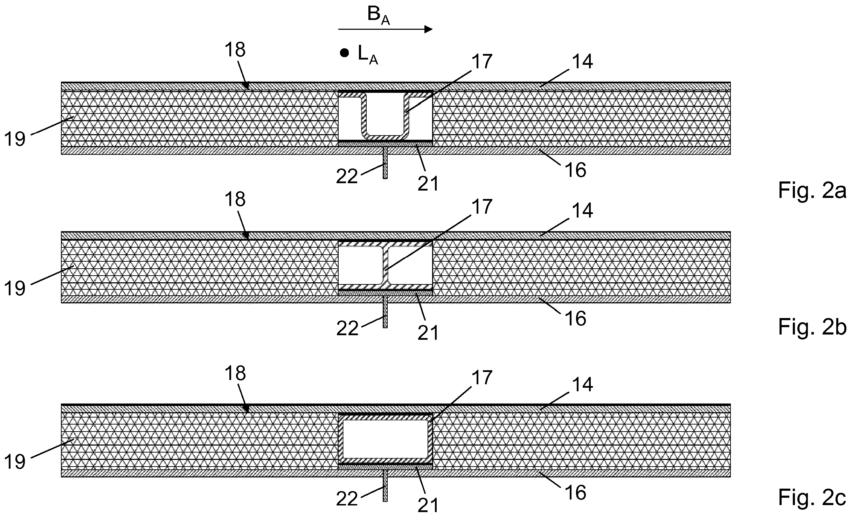

Die Formhalbschale 3 selbst besteht im Wesentlichen wiederum aus zwei Laminatschichten, einer Innenschale 14 und einer Außenschale 16, wie in den Figuren 2a bis 2c dargestellt, die jeweils wiederum feste, ausgehärtete Laminatbauteile sind. Die Rotorblatthalbschale wird auf den Herstellungsformen der Figuren 2a, 2b und 2c auf der Innenschale 14 zunächst durch Übereinanderschichten von Gelege- und/oder Gewebelagen, zusätzlichen Prepreg- oder Balsaholz-Bestandteilen und nachträglichem Infundieren mit Harz gefertigt.

Rotorblätter sind entlang ihrer Längsrichtung L, aber auch in der Breite B in verschiedener Weise gekrümmt. Die aerodynamisch optimale Krümmung kann in der Herstellung des Rotorblattes nur erzeugt werden, wenn die Formhalbschale 3, auf der hergestellt wird, selbst möglichst exakt die optimale aerodynamische Form durch entsprechende Anordnung der Formhalbschale über dem Erdboden 11 auf dem Untergestell 2 bereitstellt.

Insbesondere sollte die Formhalbschale 3 gegenüber einer theoretisch berechneten optimalen Sollform Toleranzen von größenordnungsmäßig +/- 1 mm an jeder Stelle der Formhalbschale 3 nicht überschreiten. Da die Formhalbschale 3 selbst als mehrschichtiges Laminatbauteil nicht komplett verwindungs- und biegesteif ist und Abmessungen entlang der Breite B von 3 m bis 5 m und entlang einer Länge in der Längsrichtung L von bis zu 73 m oder mehr aufweist, kann es natürlich leicht zu Abweichungen der Gestalt der Formhalbschale 3 von der Sollform im Bereich von Millimetern, ja sogar im Bereich von Zentimetern kommen. Um die ideale Sollform der Formhalbschale 3 bereitzustellen, sind die Spannschrauben 6 an dem Untergestell 2 angeordnet, und die Formhalbschale 3 ist ausschließlich auf den Spannschrauben 4 gelagert, so dass jeder Bereich der Formhalbschale 3 im Millimeterbereich in einer Höhe senkrecht zum Erdboden 11 verstellbar ist und so die Sollform eingestellt werden kann.

Durch die weißen Punkte in der Fig. 1 sind die Positionen der Spannschrauben 6 bzw. von Abstandshaltern 17 eingezeichnet. Jeder Spannschraube 6 ist genau einer der Abstandshalter 17 zugeordnet. Verschiedene prinzipielle Ausführungsformen des erfindungsgemäßen Abstandshalters 17 sind in den Fig. 2a, 2b und 2c dargestellt.

Die Fig. 2a zeigt die Formhalbschale 3 in einer Schnittansicht. Der Schnitt ist so gelegt, dass er durch einen der erfindungsgemäßen Abstandshalter 17 verläuft. Der Abstandshalter 17 ist in den Figuren 2a, 2b, 2c in einem Schnitt entlang einer Breite B_{A} dargestellt. In einem Schnitt entlang einer Längsrichtung L_{A} des Abstandshalters 17 ist der Abstandshalter 17 vollständig translationsinvariant ausgebildet.

Der Abstandshalter 17 weist in der Fig. 2a in einem Querschnitt eine Omegaform auf, in Fig. 2b eine I-Form und in Fig. 2c eine O-Form auf. Er ist entlang der gesamten Längsrichtung L_{A} omega-, I- oder O-förmig ausgebildet. Die Längsrichtung L_{A} des Abstandshalters 17 muss nicht mit der Längsrichtung L der Formhalbschale 3 übereinstimmen. Die Abstandshalter 17 können durchaus quer oder in einem Winkel zur Längsrichtung L der Formhalbschale 3 angeordnet sein.

Die Formhalbschale 3 weist die Innenschale 14, auf der das Rotorblatt gefertigt wird, und die Außenschale 16 auf. Die Innen- und Außenschale 14, 16 begrenzen die Formhalbschale innen- und außenseitig. Außenseitig der Innenschale 14 ist eine Heizschicht 18 angeordnet, in der elektrische Heizschlangen vorgesehen sind, die die Rotorblatthalbschale bei der Fertigung auf einer vorgegebenen, möglichst gleichbleibenden Temperatur halten oder ein gleichmäßiges Abkühlen der Rotorblatthalbschale gewährleisten bzw. während eines Infusionsvorgangs mit einem Zwei-Komponenten-Harz durch über die Schalenausdehnung gleichmäßige Wärmezufuhr einen Aushärtevorgang des Harzes im Rotorblatt befördern.

Zwischen der Innenschale 14 und der Außenschale 16 ist ein Kernmaterial 19 vorgesehen, das aus einem Schaum und/oder Balsaholz und/oder einem Wabenkern besteht. In den Fig. 2, 2b, 2c ist als Kernmaterial ein Aluminiumwabenprofil vorgesehen. Es ist luftdurchlässig und gestattet zusätzlich eine Temperierung der Formhalbschale, beispielsweise indem vorgewärmte Luft durch das Kernmaterial geblasen wird. Die Innenschale 14, das Kernmaterial 19 und die Außenschale 16 bilden eine Sandwichstruktur aus, die der Formhalbschale 3 hohe Stabilität verleiht und sie dennoch leicht lässt.

Die erfindungsgemäßen Abstandshalter 17 sind gemäß Fig. 2a in einem Querschnitt omegaförmig ausgebildet und mit ihren Omega-Füßen auf die Außenseite der Innenschale 14 geklebt. Innenseitig der Außenschale 16 ist eine Metallplatte 21 innenseitig auf die Außenschale 16 geklebt, und von der Metallplatte 21 steht ein Stift ab, oder es stehen eine Lasche oder zwei Laschen ab, die mit der Metallplatte 21 verschweißt sind und durch die Außenschale 16 hindurchgeführt sind. Sie bilden ein Befestigungsmittel 22 aus. An dem Befestigungsmittel 22 ist die Spannschraube 6 vorzugsweise gelenkig befestigt. Günstigerweise sind pro Metallplatte 21 zwei Befestigungsmittel 22 in Form von zwei Laschen vorgesehen, die jeweils ein Loch aufweisen, durch das ein Bolzen 23 geführt ist, der auch durch die Öse 7a der Spannschraube 6 geführt ist und somit eine gelenkige Befestigung zwischen der Spannschraube 6 und den beiden Laschen der Metallplatte 21 herstellt.

Die Größe der Metallplatte 21 und die Größe der Omega-Abstandshalter 17 ist so gewählt, dass die Auflagefläche eines Omegadaches auf der Metallplatte 21 hinreichend groß ist, damit eine zwischen ihnen ausgebildete Klebverbindung, die über die Befestigungsmittel 22 wirkende Kräfte, insbesondere die Zugkräfte, aufnimmt und auf die Innenschale 14 weiterleitet. Wiederum sind die Füße des Omega-Abstandhalters 17 so groß gewählt, dass auch hier eine Klebverbindung mit der Innenseite der Innenschale 14 fest genug ist, um insbesondere die Zugkräfte, die auf das Befestigungsmittel 22 wirken, über den Abstandshalter 17 direkt auf die Innenseite der Innenschale 14 zu leiten. Durch die Ausbildung von Abstandshaltern 17, die über das Kernmaterial 19, der Formhalbschale 3 verteilt sind, ist es somit möglich, die über die Einstelleinrichtungen wirkenden Kräfte nicht mehr nur direkt auf die Außenschale 16 wirken zu lassen, sondern über die Befestigungsmittel 22, die Metallplatte 21 und die Abstandshalter 17 vor allen Dingen direkt auf die Innenschale 14 wirken zu lassen, so dass es nicht mehr zu Laminatabrissen im Inneren der Formhalbschale 3 kommt.

Die Fig. 2b zeigt eine zweite erfindungsgemäße Ausbildungsform des Abstandshalters 17, der in einem Querschnitt I-förmig und ausgebildet ist, und Fig. 2c zeigt eine dritte Ausführungsform des Abstandhalters 17, der in einem Querschnitt O-förmig ausgebildet ist.

Sinngemäß gilt für die I- und O-Profile das Gleiche wie für das Omega-Profil. Insbesondere lassen sich auch hier die Zug- und Druckkräfte von den Spannschrauben 6 direkt auf die Innenschale 14 der Formhalbschale 3 übertragen.

Darüber hinaus sind die Abstandshalter 17 so ausgebildet, dass sie einen thermischen Luftzug im Kernmaterial 19 zumindest in einer Richtung ungehindert passieren lassen.

Fig. 3 zeigt die oben erwähnte Spannschraube 6 als eine der Formen der Einstelleinrichtung 4 zwischen Formhalbschale 3 und Untergestell 2. Es sind natürlich auch andere Einstelleinrichtungen 4 denkbar. Die Spannschrauben 6 sind jedoch mechanisch robust und bewährt und lassen sich manuell leicht mittels eines Schraubenschlüssels bedienen.

Fig. 3 zeigt die Befestigungsmittel 22 des erfindungsgemäßen Abstandshalters 17 in Form von zwei Laschen, die an einer Metallplatte 21 angeschweißt sind und durch die Außenschale 16 hindurch nach außen in Richtung des Untergestells 2 ragen. Dort sind sie an der Öse 7a der Spannschraube 6 mittels des Bolzens 23 verbunden, während die andere Öse 7b der Spannschraube 6 ebenfalls mittels eines weiteren Bolzens 24 mit den am Untergestell 2 angeschweißten zwei Laschen gelenkig verbunden ist.

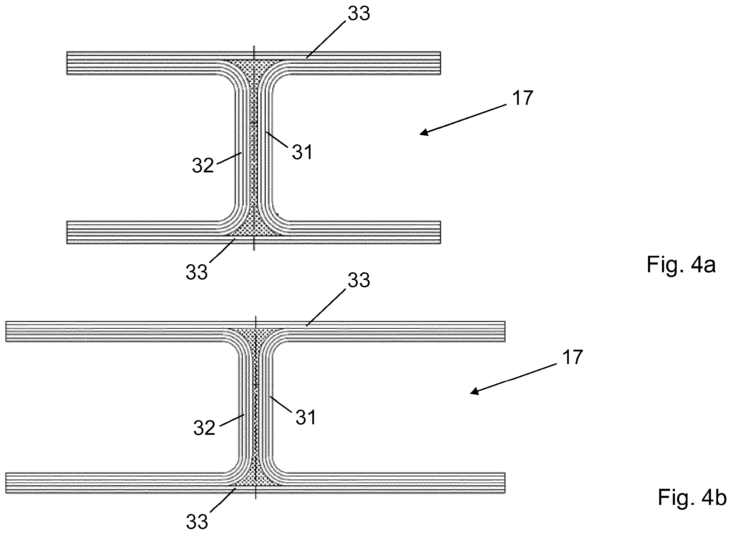

Fig. 4 zeigt eine Schnittansicht des I-förmigen Abstandshalters 17. Der I-förmige Abstandshalter 17 ist durch zwei U-förmige Gewebelagen 31, 32 gebildet, die an ihren Unterseiten gegeneinandergefügt und verklebt sind und an ihren seitlichen U-Armen mit mehreren Längsgewebelagen 33 miteinander verbunden sind. Die Gewebelagen 31, 32, 33 werden mit einem Harz infundiert oder imprägniert und bilden ein sehr festes Laminat aus, das jedoch nicht oder schlecht wärmeleitend ist, so dass die von der Heizschicht 18 erzeugte Wärme an der Innenschale 14 verbleibt und nicht über die Abstandshalter 17 nach außen abgeleitet wird.

Je nach Ort der Verwendung der Abstandshalter 17 sind diese unterschiedlich groß ausgebildet. Dabei bezieht sich die Größe insbesondere auf die innere und äußere Seite des Abstandshalters 17, d. h. die Seite, die mit der Innenschale 14 verklebt wird und die Seite, die mit der Außenschale 16 verklebt wird. Diese etwa rechteckigen oder quadratischen Flächen sind so groß gewählt, dass die Verklebung hinreichend ist, um wie oben erwähnt die Zug- und Druckkräfte aufnehmen zu können. Die tipseitigen Abstandshalter 17 weisen eine Kantenlänge von etwa 100 mm auf, während die Abstandshalter 17, die im aerodynamischen Bereich der Formhalbschale 3 vorgesehen sind, etwa 150 mm Kantenlänge aufweisen. Die Höhe der Abstandshalter 17 liegt bei etwa 50 mm. Es sind natürlich auch andere Größen denkbar.

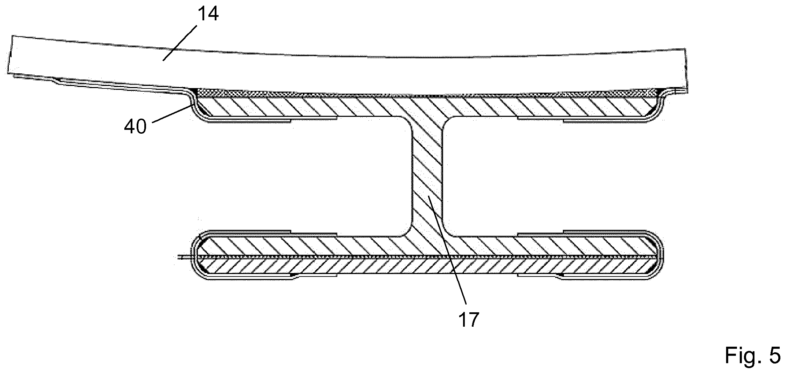

In Bereichen, in denen hohe Zuglasten auf die Abstandshalter 17 wirken, zeigt Fig. 5, dass die Abstandshalter 17 nicht nur mit ihren seitlichen Auflageflächen auf die Außenseite der Innenschale geklebt sind, sondern zusätzlich noch außen mit Laminat 40 überlaminiert sind, wodurch eine zusätzliche Festigkeit des Abstandshalters 17 an der Außenseite der Innenschale erreicht wird.

### Bezugszeichenliste

- 1: Herstellungsform
- 2: Untergestell
- 3: Formhalbschale
- 4: Einstelleinrichtungen

- 6: Spannschrauben
- 7a: Öse
- 7b: Öse
- 8a: Schraubgewinde
- 8b: Schraubgewinde
- 9: doppelseitige Schraube

- 11: Erdboden
- 12: Rotorblattwurzel
- 13: Rotorblattspitze
- 14: Innenschale

- 16: Außenschale
- 17: Abstandshalter
- 18: Heizschicht
- 19: Kernmaterial

- 21: Metallplatte
- 22: Befestigungsmittel
- 23: Bolzen
- 24: weiterer Bolzen

- 31: Gewebelagen
- 32: Gewebelagen
- 33: Längsgewebelage

- 40: Laminat

- L: Längsrichtung der Formhalbschale
- L_{A}: Längsrichtung des Abstandshalters
- B: Breite
- B_{A}: Breite Abstandshalter

## Patentansprüche

1. Herstellungsform mit
einem Untergestell (2) und einer auf dem Untergestell (2) angeordneten Formteilschale (3) mit einer Innenschale (14) und einer Außenschale (16), die durch wenigstens eine Einstelleinrichtung (4) mit dem Untergestell (2) verbunden ist,
**dadurch gekennzeichnet, dass**
wenigstens ein Abstandshalter (17) zwischen der Innenschale (14) und der Außenschale (16) angeordnet ist
und wenigstens ein Befestigungsmittel (22) positionsfest mit dem wenigstens einen Abstandshalter (17) verbunden ist und durch die Außenschale (16) hindurch zum Untergestell (2) absteht und das wenigstens eine Befestigungsmittel (22) mit jeweils einer der wenigstens einen Einstelleinrichtung (4) verbunden ist und dem wenigstens einen Abstandshalter (17) eine innenseitig der Außenschale (16) angeordnete Metallplatte (21) zugeordnet ist und von der Metallplatte (21) das wenigstens eine Befestigungsmittel (22) abgeht.

## Claims

1. Manufacturing mould with
a base frame (2) and a moulding shell (3) arranged on the base frame (2) with an inner shell (14) and an outer shell (16), which is attached to the base frame (2) through at least one adjustment device (4),
**characterised in that**
at least one spacer (17) is arranged between the inner shell (14) and the outer shell (16)
and at least one attachment means (22) is attached in a fixed position to the at least one spacer (17) and protrudes through the outer shell (16) through to the base frame (2) and the at least one attachment means (22) is attached respectively to one of the at least one adjustment devices (4) and a metal plate (21) arranged on the inner side of the outer shell (16) is associated with the at least one spacer (17) and the at least one attachment means (22) departs from the metal plate (21).

## Revendications

1. Forme de fabrication avec
un piétement (2) et une coque moulée (3) disposée sur le piétement (2) avec une coque intérieure (14) et une coque extérieure (16) qui est reliée au piétement (2) par au moins un dispositif de réglage (4),
**caractérisé en ce qu'**
au moins une entretoise (17) est disposée entre la coque intérieure (14) et la coque extérieure (16)
et au moins un moyen de fixation (22) est relié de manière fixe en position à l'au moins une entretoise (17) et fait saillie à travers la coque extérieure (16) vers le piétement (2) et l'au moins un moyen de fixation (22) est relié avec respectivement un de l'au moins un dispositif de réglage (4) et une plaque métallique (21) disposée sur le côté intérieur de la coque extérieure (16) est associée à l'au moins une entretoise (17) et l'au moins un moyen de fixation (22) s'étend depuis la plaque métallique (21).
